# EUROPÄISCHE PATENTSCHRIFT

(11) **EP 3 143 312 B1**
(45) Veröffentlichungstag und Bekanntmachung des Hinweises auf die Patenterteilung: **24.02.2021**
(21) Anmeldenummer: 15718892.1
(22) Anmeldetag: 28.04.2015
(51) Int. Cl.: F16H 63/34, F16H 61/36

(54) **VORRICHTUNG ZUR BETÄTIGUNG EINER PARKSPERRE EINES KRAFTFAHRZEUGGETRIEBES**
DEVICE FOR ACTUATING A PARKING BRAKE OF A MOTOR VEHICLE TRANSMISSION
DISPOSITIF D'ACTIONNEMENT D'UN FREIN DE STATIONNEMENT D'UNE TRANSMISSION DE VÉHICULE AUTOMOBILE

(30) Priorität: 15.05.2014 DE 102014209253
(43) Veröffentlichungstag der Anmeldung: 22.03.2017
(73) Patentinhaber: Volkswagen Aktiengesellschaft, 38440 Wolfsburg (DE)
(72) Erfinder: BLEY, Bernhard, 30169 Hannover (DE); LÖHNER, Andreas, 38159 Vechelde (DE); WÖHL-BRUHN,Henning, 38118 Braunschweig (DE)
(86) Internationale Anmeldenummer: PCT/EP2015/059224
(87) Internationale Veröffentlichungsnummer: WO 2015/173012

(56) Entgegenhaltungen:
- WO-A1-2009/118686
- WO-A1-2015/155100
- WO-A2-01/51325
- DE-A1- 2 122 241
- DE-A1-102008 000 857
- DE-A1-102010 003 508
- US-A- 4 683 774
- US-A1- 2009 151 501

## Beschreibung

Die Erfindung betrifft eine Vorrichtung zur Betätigung einer Parksperre eines Kraftfahrzeuggetriebes.

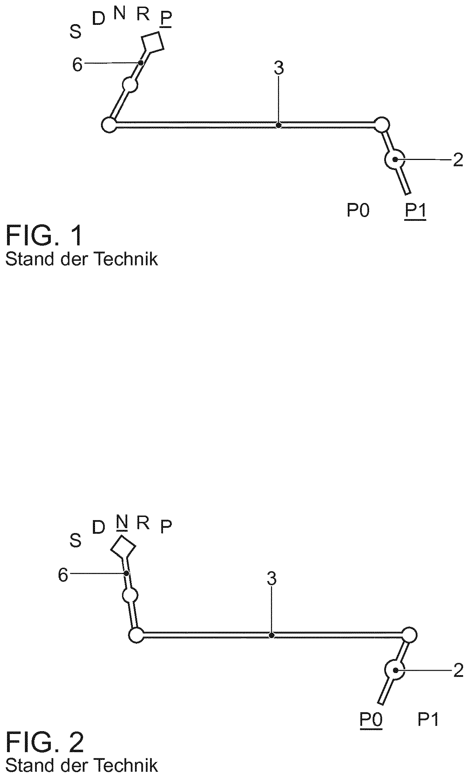

Im Stand der Technik sind unterschiedliche Vorrichtungen zur Betätigung einer Parksperre insbesondere eines automatischen, insbesondere automatisierten Schaltgetriebes eines Kraftfahrzeuges bekannt. Im Allgemeinen weisen derartige Vorrichtungen einen Seilzug 3 auf (vgl. Fig. 1 und 2), wobei ein Ende des Seilzuges 3 mit dem Schaltwählhebel 6 wirksam verbunden ist und das andere Ende des Seilzuges 3 mit der Parksperre 2 oder einer Betätigungsvorrichtung der Parksperre 2 wirksam verbunden ist. Wenn der Schaltwählhebel 6 in der Position "P" steht, ist die Parksperre 2 eingelegt, nämlich ist mit Hilfe des Seilzuges 3 in die aktivierte Stellung "P1" verbringbar (vgl. Fig. 1), wobei, wenn der Schaltwählhebel 6 in der Position "N" oder in einer Position außerhalb von "P" steht, mit Hilfe des Seilzuges 3 die Parksperre 2 ausgelegt ist, nämlich in der deaktivierten Stellung ist "PO" (vgl. Fig. 2).

Es sind aber auch andere Vorrichtungen zur Betätigung einer Parksperre bekannt, bspw. sogenannte "Shift by Wire-Schaltungen". Hier wird dann, wenn der Schalthebel in der Position "P" steht, mit Hilfe insbesondere eines Elektromotors die Parksperre im Getriebe entsprechend eingelegt. Zum Auslegen der Parksperre müssen oft sehr hohe Kräfte angewendet werden, bspw. beim Parken des Kraftfahrzeuges an einer größeren Steigung. Deswegen haben derartige "Shift by Wire-Konzepte" einen größeren Konstruktionsaufwand und sind entsprechend kostenintensiv, insbesondere weil auch hohe Anforderungen an die funktionale Sicherheit gestellt werden und im Notfall auch eine Notentriegelung vorgesehen werden muss, insbesondere dann, wenn ein Stromausfall vorliegt und die Parksperre durch einen Elektromotor bereits eingelegt worden ist.

Weiterhin gibt es Vorrichtungen zur Betätigung einer Parksperre, die über eine "externe Aktuatorik" direkt am Getriebe umgesetzt werden. Eine derartige externe Aktuatorik benötigt entsprechende Montagepunkte und zusätzlichen Bauraum direkt am Getriebe und ist daher auch nicht optimal unter dem Aspekt einer Bauraumreduzierung.

Auch sind sogenannte "Kabelpuller" bekannt, die entweder die zuvor genannte externe Aktuatorik mit einem Seilzug benötigen oder für die extra Bauraum notwendig ist oder für die im Innenraum eines Kraftfahrzeuges spezielle Akustikmaßnahmen getroffen bzw. realisiert werden müssen. Auch derartige Lösungen sind dabei konstruktionstechnisch sehr aufwändig und kostenintensiv.

So ist bspw. aus der DE 20 2010 007 515 U1, von der die Erfindung ausgeht, eine Vorrichtung zur Betätigung einer Parksperre bekannt, wo bei einem Liegenbleiben des Kraftfahrzeuges aus Sicherheitsgründen die Parksperre automatisch aktiviert wird, also in die aktivierte Stellung verbringbar ist, um ein Wegrollen des Fahrzeuges auch sicher zu verhindern. Nichts desto trotz sollte sich diese Parksperre im Bedarfsfall auch lösen lassen, also in die deaktivierte Stellung verbringbar sein, nämlich um etwa ein Abschleppen des Fahrzeuges zu ermöglichen. Im Zeitpunkt eines Spannungsausfalls ist die Parksperre hierbei zunächst in der deaktivierten Stellung. Es ist ein Halteaktuator vorgesehen, wobei nach Wegfall der Spannung, also im unbestromten Zustand aufgrund einer Feder dann eine hier im Halteaktuator vorgesehene Hebelaktuatorik geöffnet wird und ein Nippel des Seilzuges hierdurch freigegeben wird. Eine weitere vorgesehene Rückstellfeder verschiebt den nun frei gewordenen Bowdenzug dann in Richtung des Getriebes, wodurch die Parksperre aktiviert wird, also in die aktivierte Stellung verbracht und so entsprechend eingelegt wird. Hiermit ist dann das liegengebliebene Kraftfahrzeug gegen ein Wegrollen gesichert. Der zuvor genannte Halteaktuator ist hier zwischen dem Ende des Bowdenzuges und einem weiteren Aktuator angeordnet, der im Normalfall den Bowdenzug entsprechend betätigt, um die Parksperre ein- bzw. auszulegen. Der zwischen dem Seilzug (Bowdenzug) und dem Aktuator angeordnete Halteaktuator stellt daher eine mechanische Verbindung zwischen dem Ende des Bowdenzuges und dem Aktuator (Hauptaktuator) her. Anders ausgedrückt, es ist eine Betätigungsvorrichtung bestehend aus Aktuator (Hauptaktuator) und Halteaktuator vorgesehen, die den Bowdenzug (Seilzug) bzw. die Parksperre entsprechend betätigt. Diese Konstruktion ist sehr aufwändig, kostenintensiv, benötigt entsprechend großen Bauraum und ist aufgrund der Vielzahl der Komponenten auch durchaus wartungsintensiv.

So ist aus der WO 01/51325 A2 eine Vorrichtung zur Betätigung einer Parksperre eines Kraftfahrzeugs bekannt, wobei die Parksperre über einen Aktuator ein- bzw. ausgelegt werden kann, aber eine manuelle Notentriegelung über die Seele eines Bowdenzuges realisierbar ist.

Weiterhin ist aus der DE 10 2010 003 508 A1 eine Vorrichtung zur Betätigung einer Notentriegelung einer Parksperre bekannt, wobei über eine Kopplungseinheit die effektive Seilzuglänge zur Realisierung der Notentriegelung entsprechend veränderbar ist.

Aus der DE 21 22 241 A ist eine manuell betätigbare Vorrichtung bekannt, mit deren Hilfe eingelegte Bremsen, insbesondere Not- und Parkbremsen lösbar sind.

Die DE 10 2008 000 857 A1 zeigt eine Vorrichtung mit deren Hilfe ein Sperrelement im Automatikgetriebe ausgelegt werden kann. Hierzu weist die Vorrichtung ein Seilzugelement auf. Über einen Aktuator kann ein Kniehebel verschwenkt werden, mit dessen Hilfe dann das Seilzugelement in eine ^{"}Überhub-Position" verbringbar ist. Die Ausbildung des Kniehebels und der Betätigungshebel sowie die Anordnung des Aktuators ist komplex und raumfordernd.

Schließlich wird in der US 2009/0151501 A1 eine weitere Vorrichtung offenbart, wobei mit Hilfe eines Auslösehebels ein erstes und ein zweites Seilzugelement betätigbar ist. Hierbei ist ein Feststellbremspedal lösbar, nämlich über das zweite Seilzugelement, wobei über das erste Seilzugelement ein Steuerhebel bzw. ein Sperrelement betätigbar ist. Hierzu weist der Auslösehebel sowie ein damit funktional wirksam gekoppeltes Nockenelement eine Steuerkurve auf, über die eine Feststellbremse bzw. das Feststellbremspedal deaktivierbar ist. Die beiden Seilzugelemente sind nicht miteinander direkt verbunden.

Der Erfindung liegt daher nun die Aufgabe zugrunde, die zuvor genannte Vorrichtung, von der die Erfindung ausgeht, nun derart auszugestalten und weiterzubilden, so dass der benötigte Bauraum gering ist, insbesondere auch die zuvor genannten Nachteile vermieden sind.

Die zuvor aufgezeigte Aufgabe ist nun durch die Merkmale des Patentanspruches 1 gelöst.

Mit Hilfe des Seilzuges ist die Parksperre nun ist die aktivierte Stellung bzw. in die deaktivierte Stellung verbringbar, hierzu ist nun mindestens ein Aktuator vorgesehen. Entscheidend ist, dass der Seilzug bzw. das Seilzug-System nun einen Teilbereich aufweist und ein von dem Aktuator betätigbares Verbindungselement derart funktional innerhalb dieses Teilbereiches angeordnet und/oder integriert ist, so dass bei entsprechender Betätigung des Aktuators die effektive Seilzuglänge veränderbar und hierdurch dann im Endeffekt die Parksperre aktivierbar oder deaktivierbar ist. Insbesondere ist bei einer entsprechenden Betätigung des Aktuators in seinem aktiven Zustand die effektive Seilzuglänge verlängerbar, was im Folgenden noch ausführlich erläutert werden darf.

Vorzugsweise ist daher im passiven Zustand des Aktuators die Parksperre aktiviert, insbesondere eingelegt, wobei insbesondere im aktiven Zustand des Aktuators die Parksperre deaktiviert, insbesondere ausgelegt ist. Aber auch die kinematische Umkehr istals Alternative - denkbar. Denkbar ist daher, dass im aktiven Zustand des Aktuators die Parksperre aktiviert, insbesondere eingelegt ist, wobei insbesondere im passiven Zustand des Aktuators die Parksperre deaktiviert, also ausgelegt ist. Die bevorzugte Ausführungsform ist aber die oben genannte erste Alternative.

Der Aktuator und/oder das Verbindungselement ist nun vorzugsweise so ausgebildet, dass im aktiven Zustand des Aktuators die effektive Seilzuglänge - verglichen bei passiven Aktuator - entsprechend verlängert ist. Aber auch hier ist eine kinematische Umkehr entsprechend denkbar. Denkbar ist, dass im passiven Zustand des Aktuators die effektive Seilzuglänge - verglichen bei aktivem Aktuator - entsprechend verlängert ist, also der aktive Aktuator in seinem dann aktiven Zustand die Seilzuglänge verkürzt, allerdings ist die oben genannte erste Alternative die bevorzugte Ausführungsform.

Vorzugsweise ist der Aktuator als elektrisch und/oder magnetisch betätigbare Kolben-Zylindereinheit ausgebildet, aber auch andere Ausführungen, insbesondere auch anders ausgebildete Kolben-Zylindereinheiten, die bspw. einen Scharnier- und/oder Zahnrad-Schneckenantrieb aufweisen oder auch pneumatisch oder hydraulisch betätigbar sind, sind denkbar.

Es kann direkt in dem zuvor genannten Teilbereich des Seilzuges ein Verbindungselement angeordnet oder dort wirksam integriert sein, wobei der Aktuator fahrzeugfest angeordnet ist, aber funktional wirksam mit dem Verbindungselement verbunden ist.

Das Verbindungselement weist eine über den Aktuator betätigbare Hebelaktuatorik auf, sowie weitere Komponenten, die im Folgenden noch erläutert werden dürfen.

Insbesondere ist das ein Ende des Seilzuges, insbesondere eines ersten Seilzugelementes, mit dem Schaltwählhebel des Schaltgetriebes und ein anderes Ende des Seilzuges, insbesondere eines zweiten Seilzugelementes, mit der Parksperre bzw. mit dem Betätigungsmechanismus der Parksperre wirksam verbunden, wobei dazwischen, also in dem Seilzug, insbesondere zwischen dem ersten und zweiten Seilzugelement, nämlich in dem entsprechenden Teilbereich dann das Verbindungselement angeordnet ist. Insbesondere weist der Seilzug dann zwei Seilzugelemente auf bzw. besteht der Seilzug dann aus zwei Seilzugelementen.

Denkbar ist auch, dass zwischen dem Schaltwählhebel und dem Aktuator bzw. dem Verbindungselement einerseits ein Stangenelement vorgesehen ist und andererseits zwischen dem Aktuator bzw. dem Verbindungselement und der Parksperre ein Seilzugelement vorgesehen ist. Bei dieser Alternative besteht der Seilzug aus nur einem Seilzugelement, wobei der Teilbereich am Ende dieses Seilzugelementes ausgebildet ist und über das Stangenelement mit dem Schaltwählhebel verbunden ist.

Der zuvor erwähnte Teilbereich kann daher also grundsätzlich auch am Ende eines Seilzuges bzw. am Ende eines Seilzugelementes ausgebildet sein, wodurch der Seilzug dann im Endeffekt diesen Teilbereich "mit aufweist".

Denkbar ist weiterhin auch, dass zwischen dem Aktuator bzw. dem Verbindungselement und der Parksperre (bzw. der Betätigungsvorrichtung der Parksperre) ein Stangenelement vorgesehen ist und insbesondere ein Seilzugelement zwischen dem Aktuator bzw. dem Verbindungselement und dem Schaltwählhebel vorgesehen ist, insbesondere der zuvor erwähnte Teilbereich wieder am Ende des Seilzugelementes ausgebildet ist, wie oben erwähnt, und über das Stangenelement mit der Parksperre verbunden ist. Weiterhin kann auch zusätzlich zwischen dem Aktuator bzw. dem Verbindungselement und dem Schaltwählhebel - wie oben erwähnt - ein Stangenelement vorgesehen sein. Es ist daher denkbar, dass der Seilzug bzw. die entsprechenden Seilzugelemente insbesondere stangenförmig bzw. stangenähnlich oder als Stangenelemente ausgebildet sind. Also bspw. kann zwischen dem Schaltwählhebel und dem Aktuator bzw. dem Verbindungselement und/oder zwischen dem Aktuator bzw. Verbindungselement und der Parksperre jeweils ein stangenförmiges Seilzugelement oder ein als Stangenelement ausgebildetes Seilzugelement vorgesehen oder angeordnet sein. Vzw. ist der Seilzug bzw. sind die Seilzugelemente aber als Stahlseile oder als sogenannte Bowdenzüge ausgebildet.

Dadurch, dass der Aktuator und/oder ein Verbindungselement in einem Teilbereich des Seilzuges entsprechend angeordnet und/oder vorgesehen ist bzw. hier nun integriert ist und hierdurch die effektive Seilzuglänge entsprechend veränderbar ist, kann entsprechender Bauraum eingespart werden, sowie auch bestimmte Komponenten konstruktionstechnisch eingespart werden können bzw. nun nicht mehr erforderlich sind. Die eingangs genannten Nachteile sind daher vermieden und entsprechende Vorteile erzielt.

Es gibt nun eine Vielzahl von Möglichkeiten die Erfindung in vorteilhafter Weise auszugestalten und weiterzubilden. Hierfür darf zunächst auf die dem Patentanspruch 1 nachgeordneten Patentansprüche verwiesen werden. Im Folgenden dürfen nun mehrere bevorzugte Ausführungsbeispiele der Erfindung anhand der folgenden Beschreibung und der dazu gehörenden Zeichnung näher erläutert werden. In der Zeichnung zeigt:
- Fig. 1: in schematischer Darstellung eine im Stand der Technik bekannte Vorrichtung zur Betätigung einer Parksperre, mit der Parksperre in der aktivierten Stellung,
- Fig. 2.: in schematischer Darstellung die bekannte Vorrichtung zur Betätigung einer Parksperre aus Fig. 1, mit der Parksperre in der deaktivierten Stellung,
- Fig. 3: eine erste Ausführungsform einer Vorrichtung zur Betätigung einer Parksperre in schematischer Darstellung mit einem innerhalb des Seilzuges integrierten Aktuator bei passivem Zustand des Aktuators welche nicht Bestandteil der vorliegenden Erfindung ist,
- Fig. 4: die in Fig. 3 dargestellte Vorrichtung in schematischer Darstellung mit dem Aktuator im aktiven Zustand,
- Fig. 5a und 5b: die in Fig. 3 dargestellte Vorrichtung in schematischer Darstellung mit dem Aktuator im passiven Zustand, bei Positionierung des Schaltwählhebels in den Positionen "P" und "N",
- Fig. 6: in schematischer Darstellung eine Ausführungsform eines Aktuators zur Integration in den Seilzug, wobei der Aktuator insbesondere nicht fahrzeugfest, sondern bewegbar angeordnet ist die nicht Bestandteil der vorliegenden Erfindung ist,
- Fig. 7: in schematischer Darstellung den in Fig. 6 dargestellten Aktuator im passiven Zustand integriert in den Seilzug mit der Stellung des Schaltwählhebels in der Position "N", wobei die Parksperre ausgelegt ist,
- Fig. 8: den Gegenstand aus Fig. 7 in schematischer Darstellung mit dem Schaltwählhebel in der Position "P", wobei die Parksperre eingelegt ist,
- Fig. 9: den Gegenstand aus Fig. 8 in schematischer Darstellung, wobei der Aktuator betätigt, nämlich aktiviert ist bzw. im aktivierten Zustand ist, wobei die Parksperre im Getriebe ausgelegt ist,
- Fig. 10: eine zweite Ausführungsform einer erfindungsgemäßen Vorrichtung in schematischer Darstellung, wobei der Aktuator im passiven Zustand und am Fahrzeug festgelegt ist, wobei die Parksperre im Getriebe in aktivierter Stellung, also eingelegt ist,
- Fig. 11: den Gegenstand aus Fig. 10 in schematischer Darstellung, wobei der Aktuator im aktiven Zustand ist und die Parksperre im Getriebe deaktiviert, nämlich ausgelegt ist,
- Fig. 12a und 12b: in schematischer Darstellung den Gegenstand aus der Fig. 10 mit dem Aktuator in passiver Stellung, jedoch mit unterschiedlichen Stellungen des Schaltwählhebels in den Positionen "P" und "N",
- Fig. 13: die bevorzugte erfindungsgemäße zweite Ausführungsform für ein in den Seilzug integriertes mechanisches Verbindungselement in schematischer Darstellung und den Aktuator im passiven Zustand, wobei der Aktuator am Fahrzeug festgelegt ist und der Schaltwählhebel in der Position "P" steht, nämlich die Parksperre des Getriebes aktiviert, insbesondere eingelegt ist,
- Fig. 14: den Gegenstand aus Fig. 13 in schematischer Darstellung, wobei der Aktuator im passiven Zustand ist und der Schaltwählhebel in der Position "D" ist, so dass die Parksperre im Getriebe deaktiviert, insbesondere ausgelegt ist, und
- Fig. 15: den Gegenstand aus den Fig. 13 und 14 in schematischer Darstellung, wobei der Aktuator im aktiven Zustand ist und der Schaltwählhebel in der Position "P" steht, wobei die Parksperre im Getriebe aber ausgelegt ist.

Zunächst zeigen die Fig. 1 und 2 - wie bereits eingangs erläutert - in schematischer Darstellung eine im Stand der Technik bekannte Vorrichtung zur Betätigung einer Parksperre 2 mit Hilfe eines Seilzuges 3 in der bekannten üblichen Funktionsweise.

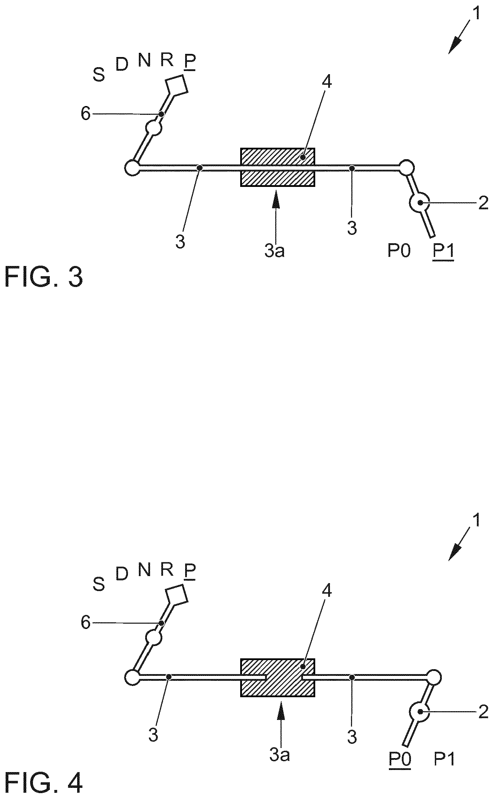

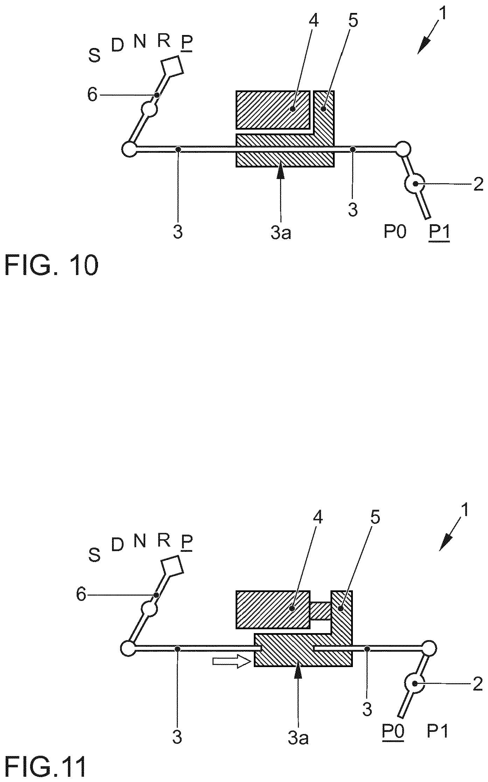

Die Fig. 3 bis 15 zeigen, zumindest teilweise, eine Vorrichtung 1 zur Betätigung einer Parksperre 2 eines Kraftfahrzeuggetriebes, insbesondere eines automatischen, insbesondere automatisierten, hier nicht im einzelnen dargestellten Schaltgetriebes, eines hier ebenfalls nicht im einzelnen dargestellten Kraftfahrzeuges. Es ist mindestens ein Seilzug 3 vorgesehen, wobei mit Hilfe des Seilzuges 3 die Parksperre 2 in die aktivierte Stellung "P1", wie bspw. in Fig. 3 gezeigt, oder in die deaktivierte Stellung "P0", wie bspw. in Fig. 4 gezeigt, verbringbar ist. Weiterhin ist mindestens ein Aktuator 4 vorgesehen, der in den Fig. 3, 4, 5a und 5b, sowie in den Fig. 10, 11, 12a und 12b schematisch dargestellt ist.

Der Seilzug 3 weist einen bestimmten Teilbereich 3a auf, wobei ein von dem Aktuator 4 betätigbares Verbindungselement 5 derart funktional innerhalb des Teilbereiches 3a angeordnet und/oder integriert ist, so dass bei entsprechender Betätigung des Aktuators 4 die effektive Seilzuglänge veränderbar und hierdurch dann im Endeffekt die Parksperre 2 aktivierbar oder deaktivierbar ist. Der zuvor genannte Teilbereich 3a ist innerhalb des Bereiches des Seilzuges 3 ausgebildet bzw. vorgesehen. Anders ausgedrückt der Seilzug 3 weist also das Verbindungselement 5 auf.

In den Fig. 3 bis 9 dargestellt ist eine erste Ausführungsform, wobei der Aktuator 4 funktional derart innerhalb des Teilbereiches 3a des Seilzuges 3 angeordnet und/oder integriert ist, so dass bei entsprechender Betätigung des Aktuators 4 die effektive Seilzuglänge veränderbar, insbesondere verlängerbar ist und hierdurch dann im Endeffekt die Parksperre vorzugsweise deaktivierbar ist. Hierbei ist der Aktuator 4 vorzugsweise nicht fahrzeugfest festgelegt, sondern insbesondere bewegbar angeordnet, was im Folgenden noch näher erläutert werden wird.

Als bevorzugte erfindungsgemäße Ausführungsform ist innerhalb des Teilbereiches 3a des Seilzuges 3 ein insbesondere mechanisches Verbindungselement 5 derart angeordnet und/oder in diesen Teilbereich 3a integriert, so dass bei einer entsprechenden Betätigung des Aktuators 4 dann die effektive Seilzuglänge des Seilzuges 3 veränderbar, insbesondere verlängerbar ist, um hierdurch die Parksperre 2 vorzugsweise zu deaktivieren. Bei der zweiten erfindungsgemäßen Ausführungsform ist der Aktuator 4 vorzugsweise fahrzeugfest angeordnet und betätigt (bzw. steuert) das entsprechende innerhalb des Teilbereiches 3a angeordnete Verbindungselement 5. Die zweite erfindungsgemäße Ausführungsform ist insbesondere in den Fig. 10 bis 15 schematisch dargestellt.

Die beiden Ausführungsformen, deren spezifische Wirkweise und/oder deren spezifische Ausbildung/Ausführung dürfen im Folgenden nun anhand der Zeichnung näher erläutert werden:
Zunächst zeigen die Fig. 3 bis 9 die zuvor genannte erste Ausführungsform, bei der der Aktuator 4 bewegbar innerhalb eines Teilbereiches 3a des Seilzuges 3 angeordnet ist. So zeigt die Fig. 3 in schematischer Darstellung den Aktuator 4 im passiven Zustand, insbesondere in einem unbestromten Zustand, wobei in diesem passiven Zustand des Aktuators 4 die Parksperre 2 aktiviert, nämlich im Getriebe eingelegt ist, wie aus Fig. 3 ersichtlich. Hierbei steht der Schaltwählhebel 6 in der Position "P" (Parken), die Parksperre 2 ist daher in ihrer aktiven Stellung "P1".

Die Fig. 4 zeigt den Aktuator 4 in schematischer Darstellung im aktiven Zustand, vorzugsweise im bestromten Zustand. Auch hier ist der Schaltwählhebel 6 - nach wie vor - in der Position "P". Weil aber der Aktuator 4 im aktiven Zustand ist, also aktiviert worden ist, verlängert sich nun, wie schematisch dargestellt und ersichtlich, die effektive Seilzuglänge des Seilzuges 3, so dass die Parksperre 2 im Getriebe ausgelegt ist, also in die deaktivierte Stellung "P0" verbracht worden ist bzw. wird.

Vergleicht man die Fig. 3 und 4, ist die Veränderung der Seilzuglänge des Seilzuges 3 deutlich zu erkennen, insbesondere auch durch die in Fig. 4 im umrahmten Kasten des Aktuators 4 dargestellte "Lücke". Die im aktiven Zustand des Aktuators 4 deaktivierte Parksperre 2 ist in Fig. 4 ebenfalls gut zu erkennen. Im aktiven Zustand des Aktuators 4 ist die effektive Seilzuglänge - verglichen zum passiven Aktuator 4 - entsprechend verlängert bzw. länger ausgebildet, wie oben erwähnt, Letzteres gilt im Übrigen auch für die zweite Ausführungsform gemäß den Fig. 10 bis 15, was im Folgenden aber noch näher erläutert werden wird.

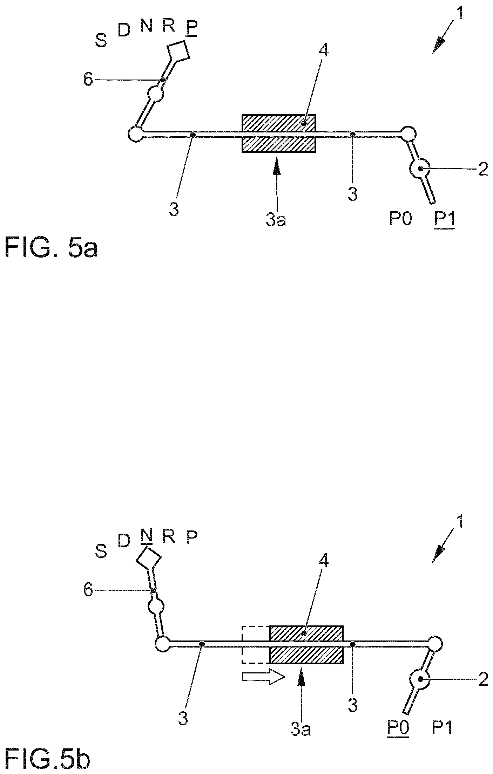

Die Fig. 5a und 5b zeigen aber deutlich, dass für den Fall, dass der Aktuator 4 im passiven Zustand, insbesondere im unbestromten Zustand ist, sich die effektive Seilzuglänge des Seilzuges 3 nicht verändert. Der Aktuator 4 ist so in dem Teilbereich 3a des Seilzuges 3 angeordnet bzw. integriert, so dass bei einer Bewegung des Schaltwählhebels 6 aus der Position "P" (Parken), so wie in Fig. 5a gezeigt, in die in Fig. 5b gezeigte Position, wenn also der Schaltwählhebel 6 in die Position "N" (Neutralstellung) bewegt wird, um in der in Fig. 5b dargestellten Position die Parksperre 2 auszulegen bzw. in die deaktivierte Stellung "P0" zu verbringen, der Aktuator 4 sich entsprechend mit dem Seilzug 3 mitbewegt. Anders ausgedrückt, der Aktuator 4, sofern dieser im passiven Zustand ist, also der "passive Aktuator 4" verändert nicht die effektive Seilzuglänge des Seilzuges 3.

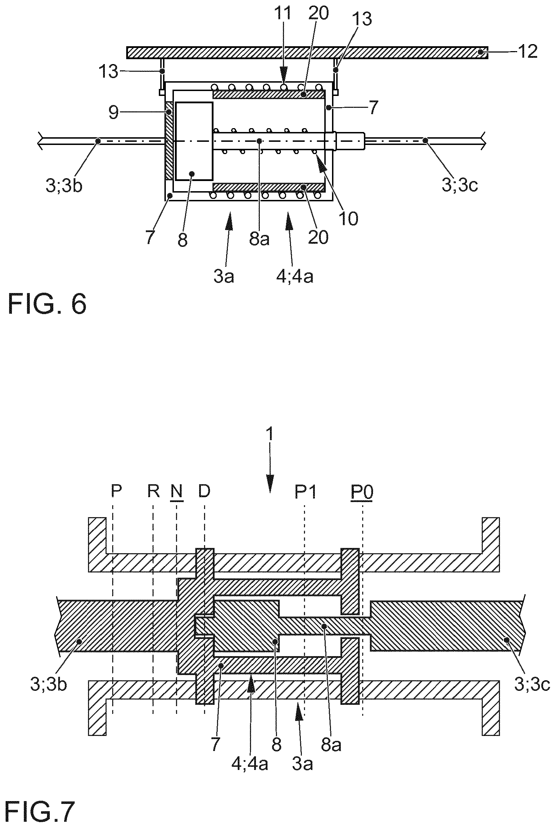

Die Fig. 6 bis 9 zeigen nun zunächst die Ausführungsform des Aktuators 4 als elektromagnetisch betätigbare Kolben-Zylindereinheit 4a. Insbesondere die Fig. 6 zeigt den strukturellen/konstruktiven Aufbau des Aktuators 4 bzw. der Kolben-Zylindereinheit 4a. Gut zu erkennen ist hier das zylinderförmige Gehäuse 7 und der in dem Gehäuse bewegbar bzw. verschiebbar angeordnete Kolben 8 bzw. die Kolbenstange 8a. An einem Ende der Wandung des Gehäuses 7 ist ein Dauermagnet 9 vorgesehen bzw. ausgebildet, wobei zwischen dem Kolben 8 und der anderen Wandung des Gehäuses 7 eine Rückstellfeder 10 angeordnet ist. Zusätzlich weist die Innenwandung des Gehäuses 7 zur Realisierung einer elektromagnetischen Kraft eine ferromagnetische Hülse 20 auf. An der Umfangswandung des Gehäuses 7 ist eine elektrische Spule 11 vorgesehen bzw. angeordnet. Im bestromten Zustand wir die ferromagnetische Hülse 20 magnetisiert und zieht dadurch den Kolben 8 nach rechts. Im passiven Zustand des Aktuators 4, also im unbestromten Zustand wird der Kolben 8 mit der Rückstellfeder 10 an die linke Wandung des Gehäuses 7 gedrückt, so wie in Fig. 6 dargestellt. Im aktivierten, also aktiven Zustand des Aktuators 4, insbesondere im bestromten Zustand wird aufgrund der elektromagnetischen Kräfte dann der Kolben 8 entgegen der Druckkraft der Rückstellfeder 10 innerhalb des Gehäuses 7 entsprechend nach rechts verschoben und verändert, insbesondere verlängert somit die effektive Seilzuglänge des Seilzuges 3. Ein Teilbereich des Seilzuges 3 ist nämlich an der linken Seite mit der Wandung des Gehäuses 7 wirksam verbunden und der andere Teil des Seilzuges 3 ist mit dem rechten Ende der Kolbenstange 8a wirksam verbunden, so wie in Fig. 6 ersichtlich und dargestellt.

Fig. 6 zeigt daher die Ausführungsform eines elektromagnetisch betriebenen Aktuators 4. Die zuvor geschilderten Ausführungen für den Aktuator 4 gelten im Wesentlichen auch für die zweite Ausführungsform der Vorrichtung 1, die in den Fig. 10 bis 15 dargestellt ist, also insbesondere auch für den in den Fig. 10 bis 15 dargestellten Aktuator 4 der zweiten Ausführungsform der Vorrichtung 1.

Ein wesentlicher Unterschied ist jedoch, dass der Aktuator 4 bei den Fig. 3 bis 9 nicht fahrzeugfest angeordnet ist, sondern bewegbar zum Fahrzeug angeordnet ist, nämlich innerhalb des Teilbereiches 3a des Seilzugs 3 im Wesentlichen komplett integriert ist. Denkbar ist auch, dass, so wie in Fig. 6 dargestellt, der Aktuator 4 bewegbar über an einer Leiste 12 angeordnete Führungsstege 13 an der Leiste 12 bewegbar geführt ist. Hingegen ist der in den Fig. 10 bis 15 gezeigte Aktuator 4 ortsfest, d.h. fahrzeugfest angeordnet, was im Folgenden noch näher erläutert werden wird.

Zuvor darf aber auf die Fig. 7 bis 9 noch näher eingegangen werden, nämlich insbesondere die Wirkungsweise des Aktuators 4 näher beschrieben werden, wobei der Aktuator 4 hier entweder im Wesentlichen direkt in dem Teilbereich 3a des Seilzuges 3 angeordnet und hier wirksam integriert ist, ohne dass eine Führung am Fahrzeug realisiert ist oder auch - als Alternative -, wie in Fig. 6 gezeigt, so dass eine Führung bzw. eine Leiste 12 und Führungsstege 13 realisiert sind, so dass der Aktuator 4 bewegbar am Fahrzeug angeordnet ist.

So zeigen die Fig. 7 bis 9 in schematischer Darstellung die Integrierung des Aktuators 4 in den Seilzug 3 bzw. in einen bestimmten Teilbereich 3a des Seilzuges 3. Ein Ende des Seilzuges 3 ist mit dem Schaltwählhebel 6, in den Fig. 7 bis 9 nicht dargestellt, verbunden und das andere Ende des Seilzuges 3 ist mit der Parksperre 2 bzw. mit einem Betätigungsmechanismus der Parksperre 2 wirksam verbunden, ebenfalls in den Fig. 7 bis 9 nicht dargestellt. Vorzugsweise ist die Parksperre 2 bzw. deren Betätigungsmechanismus in Richtung der aktivierten Stellung, also in Richtung des Einlegens der Parksperre 2 entsprechend federbelastet (letzteres gilt auch für die bevorzugte Ausführungsform, die in den Fig. 10 bis 15 dargestellt ist).

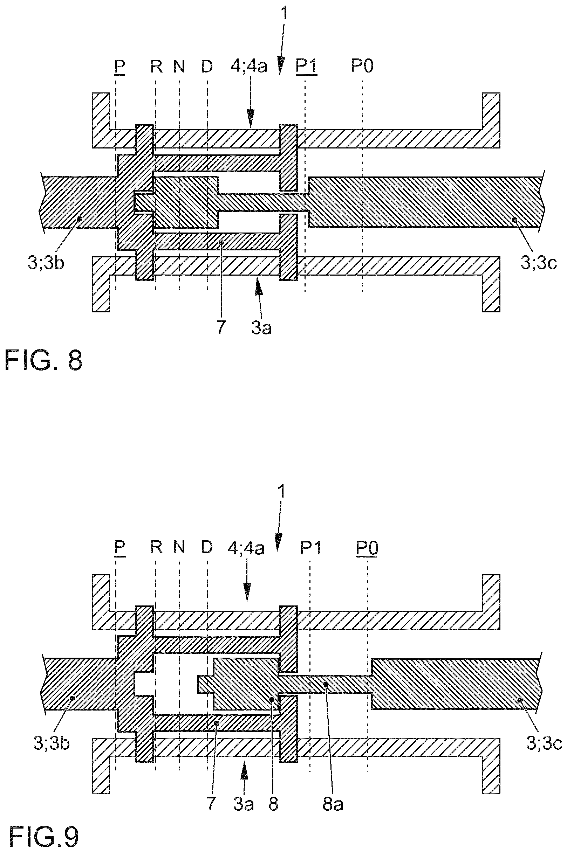

Zwar ist der Schaltwählhebel 6 bzw. die Parksperre 2 in den Fig. 7 bis 9 nicht explizit dargestellt, jedoch sind in schematischer Darstellung die Positionierungen des Seilzuges 3 bzw. des Aktuators 4 bei entsprechender Positionierung des Schaltwählhebels 6 durch entsprechende strichpunktierte Linien dargestellt. Genauso wie auch schematisch dargestellt ist, ob für bestimmte Positionen oder bei passiven oder aktiven Aktuator 4 die Parksperre 2 des Getriebes eingelegt oder ausgelegt ist, ebenfalls dargestellt durch entsprechende punktierte Linien. In der Fig. 7 steht der Schaltwählhebel 6 in der Position "N", in der Fig. 8 in der Position "P" und in der Fig. 9 ebenfalls in der Position "P".

In Fig. 7, also in der Position "N" des Schaltwählhebels (Neutralstellung) ist der hier dargestellte Aktuator 4 (wie in Fig. 6 gezeigt) vorzugsweise auch am Fahrzeug bewegbar angeordnet, nämlich insbesondere über die an einer Leiste bewegbar angeordneten Führungsstege, allerdings ist in Fig. 7 der Aktuator 4 hier unbestromt, also im passiven Zustand, so dass die Parksperre 2 ausgelegt ist bzw. der deaktivierten Stellung ist. Insbesondere aufgrund der Druckkraft einer nicht dargestellten Rückstellfeder wird der Kolben 8 an die linke Wandung des Gehäuses 7 gedrückt, so dass die effektive Seilzuglänge des Seilzuges 3 - verglichen mit dem aktivierten Zustand des Aktuators 4 - entsprechend verkürzt ist.

Nun wird, wie in Fig. 8 dargestellt, der Schaltwählhebel in die Position "P" (Parken) bewegt. Hierbei bewegt sich bei nicht aktiven Aktuator 4, also wenn der Aktuator 4 im passiven Zustand ist, der gesamte Aktuator 4 bzw. die jeweilige Kolben-Zylindereinheit 4a in die in Fig. 8 links dargestellte Position. Dadurch bedingt wird auch der Seilzug 3 von rechts nach links verschoben bzw. gezogen, so dass die Parksperre 2, wie in Fig. 8 gezeigt, von der deaktivierten Stellung "P0" in die aktivierte Stellung "P1" verbracht wird, also nun eingelegt wird bzw. eingelegt ist.

Fig. 9 zeigt nun die Aktivierung des Aktuators 4, also den Aktuator 4 im aktivierten Zustand bei der Stellung des Schaltwählhebels 6 in der Position "P", so wie auch in Fig. 8 gezeigt. Aber nun in Fig. 9 wird die effektive Seilzuglänge des Seilzuges 3 entsprechend verlängert, insbesondere weil der Aktuator 4 entsprechend bestromt wird. Hierdurch wird der Kolben 8 innerhalb des Gehäuses 7 von links nach rechts entgegen der Druckkraft einer nicht dargestellten Rückstellfeder verschoben, so dass die effektive Seilzuglänge des Seilzuges 3 vergrößert wird, nämlich der rechte Bereich des Seilzuges 3 von links nach rechts bewegt wird, so dass die Parksperre 2 in ihren deaktivierten Zustand "P0" verbracht wird, nämlich die Parksperre 2 im Getriebe ausgelegt wird, dies auch dann, wenn der Schaltwählhebel 6 in der Position "P" steht. Dies hat den Vorteil, dass mit dem so angeordneten bzw. ausgebildeten Aktuator 4 dann eine Einpark- bzw. Ausparkhilfe für das Kraftfahrzeug realisiert werden kann, auch wenn der Schaltwählhebel 6 in der Position "P" steht, insbesondere der Fahrer also bspw. auf dem Bürgersteig steht und das Fahrzeug selbstständig, insbesondere automatisch Ein- oder Ausparken lassen kann, denn dann kann die Parksperre 2, obwohl der Schaltwählhebel 6 in der Position "P" steht entsprechend leicht über eine elektronische/elektrische Steuerung ausgelegt werden, insbesondere der Aktuator 4 entsprechend aktiviert, insbesondere bestromt werden, wie zuvor beschrieben.

Denkbar sind selbstverständlich auch andere Ausführungsformen für den Aktuator 4, insbesondere auch als Kolben-Zylindereinheit 4a. Vorzugsweise weist zwar hier die Kolben-Zylindereinheit 4a eine Rückstellfeder 10 und einen Dauermagneten 9 sowie eine Spule 11 auf. Denkbar ist aber auch, dass der Aktuator 4 als Kolben-Zylindereinheit ausgebildet ist, wobei der Kolben dann über einen Schrittmotor, einen Scharnier- und/oder einen Zahnrad-Schneckenantrieb oder auch pneumatisch oder hydraulisch betätigbar ist. Letzteres ist abhängig von der spezifischen Ausführung des jeweiligen Aktuators 4. Die zuvor genannten Alternativen für andere Ausführungsformen des Aktuators 4 gelten grundsätzlich auch für die in der Fig. 10 bis 15 gezeigte erfindungsgemäße zweite Ausführungsform der Vorrichtung 1

Die Fig. 10 bis 15 zeigen nun die bevorzugte erfindungsgemäße Ausführungsform für die Vorrichtung 1:
In rein schematischer Darstellung zeigen hier die Fig. 10, 11, 12a und 12b zunächst, dass direkt in dem Teilbereich 3a des Seilzuges 3 das Verbindungselement 5 angeordnet bzw. hier wirksam in den Seilzug 3 integriert ist. Vorzugsweise ist das Verbindungselement 5 rein mechanisch ausgebildet, wobei bei der zweiten in den Fig. 10 bis 15 gezeigten Ausführungsform der Aktuator 4 nun - im Gegensatz zu der in den Fig. 3 bis 9 dargestellten Ausführungsform - fahrzeugfest angeordnet ist. Allerdings ist der Aktuator 4 nun funktional wirksam mit dem zuvor genannten Verbindungselement 5 verbunden bzw. kann auf das Verbindungselement 5 entsprechend einwirken. Letzteres ist in den Fig. 10 und 11 zunächst schematisch dargestellt.

So zeigt die Fig. 10 den Aktuator 4 im passiven Zustand, wobei deutlich zu erkennen ist, dass das Verbindungselement 5 direkt in dem Teilbereich 3a des Seilzuges 3 integriert und/oder hier befestigt ist. Der Schaltwählhebel 6 steht in der Position "P" (Parken), wobei, wie die Fig. 10 zeigt, die Parksperre 2 im Getriebe eingelegt ist, also in ihrer aktivierten Stellung "P1" ist.

Wenn nun, wie in Fig. 11 gezeigt, der Aktuator 4 aktiviert wird, also im aktiven Zustand ist, insbesondere bestromt wird, wirkt dieser auf das mechanische Verbindungselement 5 vorzugsweise entsprechend ein bzw. betätigt dieses. Hierbei ist das Verbindungselement 5 so ausgebildet, dass dann die effektive Seilzuglänge des Seilzuges 3 entsprechend verlängerbar ist, was durch die in dem Kasten des Verbindungselementes 5 erkennbare "Lücke" dargestellt sein soll. Aufgrund der Veränderung der effektiven Seilzuglänge des Seilzuges 3 wird dann, obwohl der Schaltwählhebel 6 in der Position "P" (Parken) - wie in Fig. 11 gezeigt - steht, die Parksperre 2 dann ausgelegt, also in ihre deaktivierte Stellung "P0" verbracht.

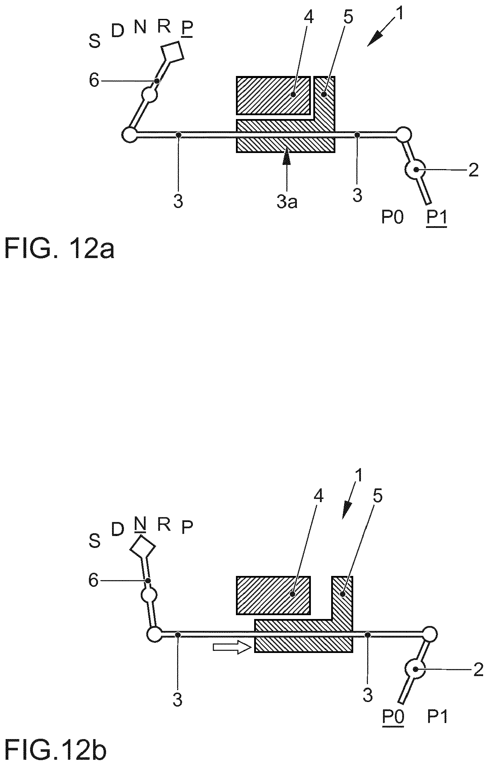

Wie die Fig. 12a und 12b, ähnlich wie die Fig. 5a und 5b, zeigen sollen, hat dann, wenn der Aktuator 4 passiv ist, also in seinem passiven Zustand ist, dieser passive Zustand keinen Einfluss auf die effektive Seilzuglänge des Seilzuges 3. Sondern bei einer Bewegung des Schaltwählhebels 6 aus der Position "P", wie in Fig. 12a gezeigt, in die Position "N" (Neutralstellung), wie in Fig. 12b gezeigt, verändert sich dann nicht die Seilzuglänge des Seilzuges 3, sondern die Parksperre 2 wird aus der in Fig. 12a dargestellten aktivierten Stellung "P1" in ihre in Fig. 12b dargestellte deaktivierte Stellung "P0" verbracht, wobei sich das Verbindungselement 5 einfach mit dem Seilzug 3 entsprechend mitbewegt, ohne die Länge des Seilzuges 3 zu verändern.

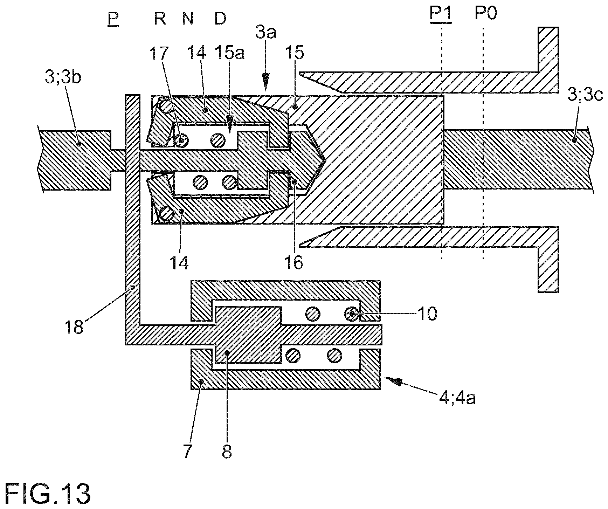

Die Fig. 13 bis 15 zeigen nun den Aktuator 4, der hier insbesondere als elektromagnetisch betätigbare Kolben-Zylindereinheit 4a ausgebildet ist, in schematischer Darstellung, jedoch ist der hier in den Fig. 13 bis 15 dargestellte Aktuator 4 ortsfest angeordnet, insbesondere fahrzeugfest an einer bestimmten Position montiert. In dem Seilzug 3, nämlich in dem Teilbereich 3a des Seilzuges 3 integriert bzw. angeordnet ist jedoch hier das mechanische Verbindungselement 5. Das Verbindungselement 5 weist, wie die die Fig. 13 bis 15 zeigen, eine über den Aktuator 4 betätigbare Hebelaktuatorik 14, eine Hülse 15 mit einer Ausnehmung 15a und ein in der Ausnehmung 15a geführtes Kolbenelement 16 auf. Insbesondere ist eine Druckfeder 17 zwischen dem Kolbenelement 16 und einer Endwandung der Hülse 15 vorgesehen.

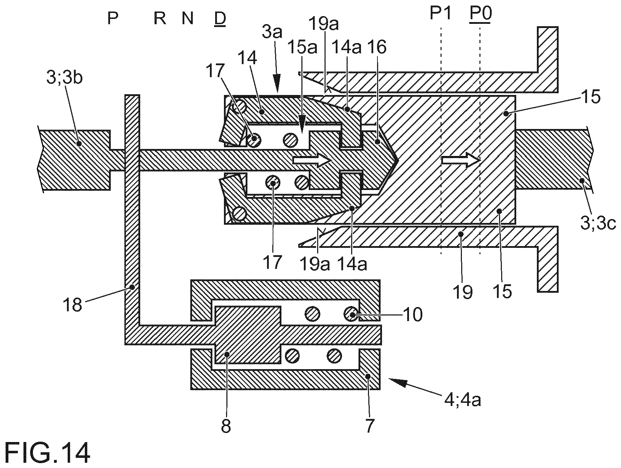

Wie die Fig. 13 und 14 zeigen, wird das Kolbenelement 16 über die Hebelaktuatorik 14, dann wenn der Aktuator 4 in einem passiven Zustand ist, in einer bestimmten Position fixiert. An dem Kolbelement 16 ist ein Teil des Seilzuges 3 angeordnet bzw. wirksam mit diesem verbunden, wobei der andere Teil des Seilzuges 3 an der dem Kolbenelement 16 gegenüberliegende Endwandung der Hülse 15 befestigt bzw. hiermit wirksam gekoppelt ist.

Vorzugsweise wird das Kolbenelement 16 über die Hebelaktuatorik 14 formschlüssig verriegelt bzw. entsprechend entriegelt, insbesondere weist die Hebelaktuatorik 14 entsprechende nicht näher bezeichnete Hebelarme mit hier nicht näher bezeichneten, in entsprechende Ausnehmungen des Kolbenelementes 16 eingreifende Nasen auf.

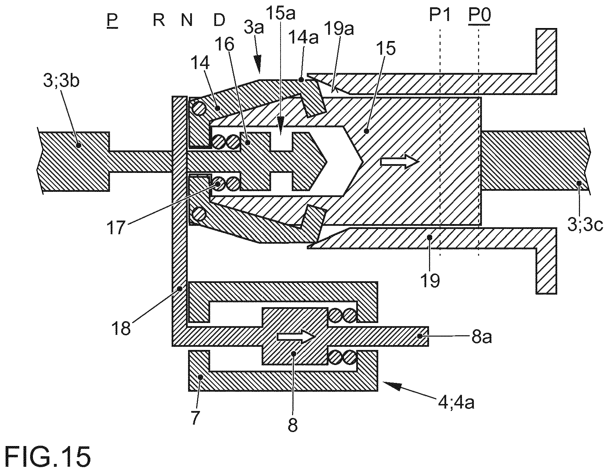

Weiterhin zeigen die Fig. 13 bis 15, dass der Aktuator 4 über einen Stellhebel 18 mit der Hebelaktuatorik 14 bzw. der linken Endwandung der Hülse 15 in Wirkverbindung treten kann, wie insbesondere in Fig. 15 gezeigt, nämlich vorzugsweise dann, wenn der Aktuator 4 in den aktiven Zustand verbracht wird bzw. aktiviert wird, insbesondere bestromt wird.

Fig. 13 zeigt den Schaltwählhebel 6 in der Position "P" und den Aktuator 4 in seinem passiven Zustand. Vorzugsweise ist der Aktuator 4 als elektrisch, magnetisch betätigbare Kolben-Zylindereinheit 4a ausgebildet, wie zuvor im Wesentlichen erläutert, jedoch ortsfest am Fahrzeug angebracht. In der in Fig. 13 schematisch dargestellten Positionierung des passiven Aktuators 4 wird die Hebelaktuatorik 14 des mechanischen Verbindungselementes 5 nicht betätigt, so dass das Kolbenelement 16 mit Hilfe der Hebelaktuatorik 14 entsprechend verriegelt ist. Daher wird der Seilzug 3 bei einer entsprechenden Betätigung des Schalthebels in die Position "P", so wie in Fig. 13 dargestellt, entsprechend verschoben, so dass die Parksperre 2 in die aktivierte Stellung "P1" verbracht wird, also die Parksperre 2 im Getriebe entsprechend eingelegt wird bzw. dann eingelegt ist, so wie in Fig. 13 dargestellt.

Fig. 14 zeigt nun ebenfalls den Aktuator 4 im passiven, also nicht aktivierten Zustand, allerdings für den Schaltwählhebel in der Position "D" (Drive). Gut zu erkennen ist, dass der passive Aktuator 4, die Hebelaktuatorik 14 des Verbindungselementes 5 nicht betätigt, also die Hebelaktuatorik 14 das Kolbenelement 16 entsprechend formschlüssig verriegelt, also die Seilzuglänge des Seilzuges 3 nicht verändert wird. Daher wird bei der Schaltwählhebelstellung in der Position "D" der Seilzug 3 im Wesentlichen von links nach rechts verschoben (verglichen mit Fig. 13), so dass dann die Parksperre 2 im Getriebe ausgelegt wird, insbesondere also in den ihre deaktivierte Stellung "P0" verbracht wird.

Fig. 15 zeigt nun eine Aktivierung des Aktuators 4, also den Aktuator 4 im aktiven Zustand, insbesondere im bestromten Zustand. Der Schaltwählhebel steht in der Position "P", aber durch die Aktivierung des Aktuators 4 wird der Stellhebel 18 von links (wie in Fig. 13 dargestellt) nach rechts, wie nun in Fig. 15 dargestellt, verschoben. Hierbei betätigt der Stellhebel 18 die Hebelaktuatorik 14 dermaßen, so dass die entsprechenden Hebelelemente nach außen verschwenkt werden, so dass das Kolbenelement 16 entriegelt wird. Weiterhin wirkt der Stellhebel 18 auf die linke Endwandung der Hülse 15 ein und verschiebt diese entgegen der Federkraft der Druckfeder 17, so dass das Kolbenelement 16 innerhalb der Ausnehmung 15a nach links auch entgegen der Federkraft der Druckfeder 17 verschoben wird bzw. sich nach links bewegt. Hierdurch verlängert sich die effektive Seilzuglänge des Seilzuges 3, so dass dann - im Endeffekt - die Parksperre 2 im Getriebe ausgelegt wird, also von der aktivierten Stellung "P1" in die deaktivierte Stellung "P0" verbracht wird, wie in

Fig. 15 dargestellt. Der aktive Aktuator 4 betätigt daher über den Stellhebel 18 die Hebelaktuatorik 14 zur Entriegelung des Kolbenelementes 16, wobei der Stellhebel 18 auch mit der Endwandung der Hülse 15 in Kontakt bringbar ist, um die entsprechende Verschiebung zu realisieren.

Bei der in den Fig. 13 bis 15 dargestellten erfindungsgemäßen zweiten Ausführungsform der Vorrichtung 1 ist das Verbindungselement 5, insbesondere in einer Führungshülse 19 geführt. Die Führungshülse 19 weist an einem Ende angeschrägte Führungsflächen 19a auf. Die Führungshülse 19, insbesondere die angeschrägten Führungsflächen 19a und die Hebelaktuatorik 14, insbesondere hier vorgesehene Führungsflächen 14a wirken einerseits so zusammen, dass bei einer Bewegung des Seilzuges 3 nach rechts die Hebelaktuatorik 14 geschlossen wird. Andererseits ist die Hülse 15, die Hebelaktuatorik 14 und die Führungshülse 19 insbesondere so ausgebildet und ausgeführt, dass wenn der Schaltwählhebel 6 außerhalb der Position "P" ist, die Hebelaktuatorik 14 nicht entriegelt werden kann, also immer in der geschlossenen, verriegelten Stellung ist.

Obwohl also hier bei der bevorzugten Ausführungsform der Aktuator 4 ortsfest, insbesondere fahrzeugfest an einer bestimmten Position angebracht ist, wirkt dieser mit dem Verbindungselement 5 so zusammen, dass im aktiven Zustand des Aktuators 4 die effektive Seilzuglänge des Seilzuges 3 vergrößert wird, insbesondere dann um die Parksperre 2, auch wenn der Schaltwählhebel in der Position "P" steht, auszulegen, also in die deaktivierte Stellung "P0" zu verbringen.

Denkbar sind auch andere Alternativen/Ausführungsformen für den in den Fig. 10 bis 15 dargestellten Aktuator 4, wie eingangs erwähnt, nämlich über die Realisierung des Antriebs für den Kolben bzw. für das Kolbenelement über einen Schrittmotor, eine Scharnier- und/oder Zahnrad-Schneckenantrieb oder auch pneumatisch oder hydraulisch, je nach Ausführungsform.

Die in den Fig. 6 bis 9 bzw. in den Fig. 13 bis 15 dargestellten beiden Ausführungsformen weisen hier einen Seilzug 3 auf, der zwei Seilzugelemente 3b und 3c aufweist, insbesondere besteht hier der Seilzug 3 also aus den beiden Seilzugelementen 3b und 3c. Bei der in den Fig. 6 bis 9 dargestellten Ausführungsform ist das - hier dargestellte linke - Seilzugelement 3b einerseits mit dem Schaltwählhebel 6, andererseits mit der dortigen Hülse 7 des Aktuators 4 verbunden, wobei das - rechts dargestellte - Seilzugelement 3c einerseits mit der Kolbenstange 8a des Aktuators 4 und andererseits mit der Parksperre 2 verbunden ist. Der Teilbereich 3a ist also zwischen den beiden Seilzugelementen 3b und 3c angeordnet bzw. ausgebildet. Anders ausgedrückt, der Aktuator 4 verbindet hier die beiden Seilzugelemente 3b und 3c. Bei der in den Fig. 13 bis 15 dargestellten erfindungsgemäßen zweiten Ausführungsform weist der Seilzug 3 ebenfalls zwei Seilzugelemente 3b und 3c auf. Das in den Fig. 13 bis 15 links dargestellte Seilzugelement 3b ist einerseits mit dem Schaltwählhebel 6 und andererseits mit der hier nicht näher bezeichneten Kolbenstange des Kolbenelementes 16 verbunden, wobei das andere - in den Fig. 13 bis 15 rechts dargestellte - Seilzugelement 3c einerseits mit der Hülse 15 und andererseits mit der Parksperre 2 verbunden ist. Der Teilbereich 3a ist also auch hier zwischen den beiden Seilzugelementen 3b und 3c angeordnet und ausgebildet. Hier ist das Verbindungselement 5 daher in dem Teilbereich 3a angeordnet bzw. vorgesehen bzw. verbindet die beiden Seilzugelemente 3b und 3c. Bei der in den Fig. 6 bis 9 und 13 bis 15 dargestellten Ausführungsformen weist der Seilzug 3 also die beiden Seilzugelemente 3b und 3c auf bzw. besteht aus diesen Seilzugelementen 3b und 3c.

Die Fig. 3 bis 15 zeigen daher grundlegende Prinzip des Auslegens der Parksperre 2, also des Deaktivierens der Parksperre 2 durch eine Verlängerung des Seilzuges 3. Grundsätzlich ist natürlich auch die "umgekehrte Lösung", also eine Verkürzung der Seillänge des Seilzuges 3, insbesondere auch bei einer Aktivierung des entsprechenden Aktuators möglich, also grundsätzlich die entsprechende kinematische Umkehr der in den Fig. 3 bis 15 dargestellten bevorzugten Ausführungsformen.

Vorzugsweise beeinflusst aber der Aktuator 4 im passiven Zustand bei den bevorzugten Ausführungsformen die normale Funktion des Seilzuges 3 nicht, verlängert oder verkürzt diese Seilzuglänge eben nicht, sondern nur im aktiven Zustand des Aktuators 4 wird eine Verlängerung ermöglicht. Denkbar ist aber auch der Umkehrfall, also auch eine Verkürzung der Seilzuglänge bei einem aktiven Aktuator. Insbesondere ist auch zusätzlich eine manuelle Notentriegelung realisiert, die bei einem unbestromten Aktuator 4, also wenn der Aktuator 4 im passiven Zustand ist, durch den Aktuator 4 nicht beeinflusst wird, also in üblicher Form betätigt werden kann.

Entscheidend ist, dass in einem Teilbereich 3a des Seilzuges 3 ein vom Aktuator 4 betätigbares Verbindungselement 5 entsprechend dort integriert und/oder angeordnet ist, so dass sich die effektive Seilzuglänge entsprechend verändert, insbesondere wenn der Aktuator 4 aktiviert wird, wie oben beschrieben, um die Parksperre ein- oder auszulegen, insbesondere um die Parksperre 2 auszulegen.

Für den Fall, dass der Aktuator 4 als elektromagnetische Kolben-Zylindereinheit 4a ausgebildet ist, ist vorzugsweise ein redundantes System realisiert, um auch entsprechenden Sicherheitsanforderungen bzgl. des Auslegens der Parksperre gerecht zu werden. Die Auslegekraft der Parksperre kann minimiert werden, bspw. durch eine Vorspannung des Auslösemechanismus. Insbesondere wird die Kraft beim manuellen Einlegen des Schaltwählhebels in die Position "P", z.B. in die Form einer Federvorspannung gespeichert, um beim automatischen Auslegen, eine notwendige Kraft zu verringern.

Mit der Vorrichtung kann ein automatisches Ein- und Ausparken eines Kraftfahrzeuges, insbesondere in der ebenen Fläche in vorteilhafter Art und Weise realisiert werden. Der Fahrer steht vor seinem Kraftfahrzeugt, drückt die Fernbedienung für den automatischen Parkpiloten und der Aktuator legt die Parksperre aus, insbesondere obwohl der Schaltwählhebel in der Position "P" steht, das Fahrzeug fährt aus der Parklücke heraus bzw. im umgekehrten Fall in die Parklücke herein, wobei der Aktuator die Parksperre wieder einlegt, nachdem der Parkvorgang beendet ist.

### Bezugszeichenliste

- 1: Vorrichtung
- 2: Parksperre
- 3: Seilzug
- 3a: Teilbereich
- 3b: erstes Seilzugelement
- 3c: zweites Seilzugelement
- 4: Aktuator
- 4a: Kolben-Zylindereinheit
- 5: Verbindungselement
- 6: Schaltwählhebel
- 7: Gehäuse
- 8: Kolben
- 8a: Kolbenstange
- 9: Dauermagnet
- 10: Rückstellfeder
- 11: Spule
- 12: Leiste
- 13: Führungsstege
- 14: Hebelaktuatorik
- 14a: Führungsflächen
- 15: Hülse
- 15a: Ausnehmung
- 16: Kolbenelement
- 17: Druckfeder
- 18: Stellhebel
- 19: Führungshülse
- 19a: Führungsflächen
- 20: ferromagnetische Hülse

- P1: aktivierte Stellung Parksperre
- P0: deaktivierte Stellung Parksperre

## Patentansprüche

1. Vorrichtung (1) zur Betätigung einer Parksperre (2) eines Kraftfahrzeuggetriebes, wobei mindestens ein Seilzug (3) vorgesehen ist, wobei mit Hilfe des Seilzuges (3) die Parksperre (2) in eine aktivierte Stellung (P1) und in eine deaktivierte Stellung (P0) verbringbar ist, und wobei mindestens ein Aktuator (4) vorgesehen ist, wobei der Seilzug (3) ein erstes und ein zweites Seilzugelement (3b, 3c) und einen innerhalb des Seilzuges (3) ausgebildeten, nämlich zwischen den beiden Seilzugelementen (3b, 3c) ausgebildeten Teilbereich (3a) aufweist, wobei ein von dem Aktuator (4) betätigbares Verbindungselement (5) derart funktional innerhalb des Teilbereiches (3a) angeordnet und/oder integriert ist, so dass bei entsprechender Betätigung des Aktuators (4) die effektive Seilzuglänge veränderbar und hierdurch dann im Endeffekt die Parksperre (2) aktivierbar oder deaktivierbar ist, wobei das Verbindungselement (5) eine über den Aktuator (4) betätigbare Hebelaktuatorik (14) aufweist..

2. Vorrichtung nach Anspruch 1, **dadurch gekennzeichnet, dass** im passiven Zustand des Aktuators (4) die Parksperre (2) aktiviert, insbesondere eingelegt ist.

3. Vorrichtung nach Anspruch 1 oder 2, **dadurch gekennzeichnet, dass** im aktiven Zustand des Aktuators (4) die Parksperre (2) deaktiviert, insbesondere ausgelegt ist.

4. Vorrichtung nach einem der vorstehenden Ansprüche, **dadurch gekennzeichnet, dass** im aktiven Zustand des Aktuators (4) die effektive Seilzuglänge - verglichen bei passivem Aktuator (4) - verlängert ist.

5. Vorrichtung nach einem der vorstehenden Ansprüche, **dadurch gekennzeichnet, dass** der Aktuator (4) als elektromagnetisch betätigbare Kolben-Zylindereinheit (4a) ausgeführt ist.

6. Vorrichtung nach Anspruch 5, **dadurch gekennzeichnet, dass** die Kolben-Zylindereinheit (4a) eine Rückstellfeder (10) und eine Spule (11) aufweist.

7. Vorrichtung nach einem der vorstehenden Ansprüche, **dadurch gekennzeichnet, dass** der Aktuator (4) als Kolben-Zylindereinheit ausgebildet ist, wobei der Kolben über einen Schrittmotor, einen Scharnier- und/oder Zahnrad-Schneckenantrieb oder pneumatisch oder hydraulisch betätigbar ist.

8. Vorrichtung nach einem der vorstehenden Ansprüche, **dadurch gekennzeichnet, dass** direkt in dem Teilbereich (3a) des Seilzuges (3) das Verbindungselement (5) angeordnet oder dort wirksam integriert ist, wobei der Aktuator (4) fahrzeugfest angeordnet ist, aber funktional wirksam mit dem Verbindungselement (5) verbunden ist.

9. Vorrichtung nach einem der vorstehenden Ansprüche, **dadurch gekennzeichnet, dass** das Verbindungselement (5) eine Hülse (15) mit einer Ausnehmung (15a) aufweist, wobei ein Kolbenelement (16) in der Ausnehmung (15a) führbar ist.

10. Vorrichtung Anspruch 9, **dadurch gekennzeichnet, dass** das Kolbenelement (16) durch die an der Hülse (15) bewegbar angeordnete Hebelaktuatorik (14) verriegelbar oder entriegelbar ist, insbesondere die Hülse (15), die Hebelaktuatorik (14) und eine Führungshülse (19) so ausgebildet ist, dass wenn ein mit dem ersten Seilzugelement (3b) verbundener Schaltwählhebel (6) in einer Position außerhalb der Position "P" steht, die Hebelaktuatorik (14) in der verriegelten Stellung ist.

11. Vorrichtung nach einem der Ansprüche 9 oder 10, **dadurch gekennzeichnet, dass** zwischen dem Kolbenelement (16) und der Hülse (15) eine wirksame Druckfeder (17) angeordnet ist.

12. Vorrichtung nach einem der Ansprüche 9 bis 11, **dadurch gekennzeichnet, dass** der aktive Aktuator (4) über einen Stellhebel (18) die Hebelaktuatorik (14) wirksam zur Entriegelung des Kolbenelementes (16) betätigt, wobei der Stellhebel (18) mit der Endwandung der Hülse (15) in Kontakt bringbar ist.

13. Vorrichtung nach einem der vorstehenden Ansprüche, **dadurch gekennzeichnet, dass** das erste Seilzugelement mit einem Schaltwählhebel (6) des Kraftfahrzeuggetriebes und das zweite Seilzugelement (3c) mit der Parksperre (2) bzw. mit dem Betätigungsmechanismus der Parksperre (2) wirksam verbunden ist, wobei insbesondere die Parksperre (2) bzw. deren Betätigungsmechanismus in Richtung ihres aktivierten Zustandes entsprechend federbelastet ist.

## Claims

1. Device (1) for actuating a parking lock (2) of a motor vehicle transmission, wherein at least one control cable (3) is provided, wherein with the aid of the control cable (3), the parking lock (2) can be moved into an activated position (P1) and into a deactivated position (P0), and wherein at least one actuator (4) is provided, wherein the control cable (3) has a first and a second control cable element (3b, 3c) and a sub-region (3a) formed within the control cable (3), namely between the two control cable elements (3b, 3c), wherein a connecting element (5) which can be actuated by the actuator (4) is functionally arranged and/or integrated within the sub-region (3a) in such a way that, when the actuator (4) is correspondingly actuated, the effective control cable length is changeable and, as a result, the parking lock (2) is ultimately activatable or deactivatable, wherein the connecting element (5) has a lever actuation system (14) that can be actuated by means of the actuator (4).

2. Device according to Claim 1, **characterized in that** in the passive state of the actuator (4), the parking lock (2) is activated, in particular engaged.

3. Device according to Claim 1 or 2, **characterized in that** in the active state of the actuator (4), the parking lock (2) is deactivated, in particular disengaged.

4. Device according to one of the preceding claims, **characterized in that** in the active state of the actuator (4), the effective control cable length is lengthened compared to its length when the actuator (4) is in the passive state.

5. Device according to one of the preceding claims, **characterized in that** the actuator (4) is designed as an electromagnetically actuatable piston cylinder unit (4a).

6. Device according to Claim 5, **characterized in that** the piston cylinder unit (4a) has a return spring (10) and a coil (11).

7. Device according to one of the preceding claims, **characterized in that** the actuator (4) is formed as a piston cylinder unit, wherein the piston can be actuated by means of a stepper motor, a hinge and/or gearwheel screw drive, or pneumatically or hydraulically.

8. Device according to one of the preceding claims, **characterized in that** the connecting element (5) is arranged directly in the sub-region (3a) of the control cable (3) or is operatively integrated there, wherein the actuator (4) is arranged so as to be fixed to the vehicle but is functionally operatively connected to the connecting element (5).

9. Device according to one of the preceding claims, **characterized in that** the connecting element (5) has a sleeve (15) with a recess (15a), wherein a piston element (16) can be guided within the recess (15a).

10. Device according to Claim 9, **characterized in that** the piston element (16) can be locked or unlocked by the lever actuation system (14) which is movably arranged on the sleeve (15); the sleeve (15), the lever actuation system (14), and a guide sleeve (19) are in particular designed such that, when a shift selector lever (6) connected to the first control cable element (3b) is in a position outside the position "P," the lever actuation system (14) is in the locked position.

11. Device according to one of Claims 9 or 10, **characterized in that** an operative compression spring (17) is arranged between the piston element (16) and the sleeve (15).

12. Device according to one of Claims 9 to 11, **characterized in that** the active actuator (4) operatively actuates the lever actuation system (14) by means of an actuating lever (18) in order to unlock the piston element (16), wherein the actuating lever (18) can be brought into contact with the end wall of the sleeve (15).

13. Device according to one of the preceding claims, **characterized in that** the first control cable element is operatively connected to a shift selector lever (6) of the motor vehicle transmission and the second control cable element (3c) is operatively connected to the parking lock (2) or to the actuating mechanism of the parking lock (2), wherein in particular the parking lock (2) or its actuating mechanism is correspondingly spring-loaded in the direction of its activated state.

## Revendications

1. Dispositif (1) destiné à l'actionnement d'un frein de stationnement (2) d'une transmission de véhicule automobile, dans lequel au moins un câble (3) est prévu, dans lequel, au moyen du câble (3), le frein de stationnement (2) peut être amené dans une position activée (P1) et dans une position désactivée (P0) et dans lequel au moins un actionneur (4) est prévu, dans lequel le câble (3) présente un premier et un deuxième élément de câble (3b, 3c) et une zone partielle (3a) formée à l'intérieur du câble (3), à savoir formée entre les deux éléments de câble (3b, 3c), dans lequel un élément de liaison (5) pouvant être actionné par l'actionneur (4) est disposé et/ou intégré de manière fonctionnelle à l'intérieur de la zone partielle (3a) de sorte que, lors de l'actionnement correspondant de l'actionneur (4), la longueur de câble effective puisse être modifiée et, ainsi, en guise d'effet final, le frein de stationnement (2) puisse être activé ou désactivé, dans lequel l'élément de liaison (5) présente un actionneur de levier (14) pouvant être actionné par l'actionneur (4).

2. Dispositif selon la revendication 1, **caractérisé en ce que,** dans l'état passif de l'actionneur (4), le frein de stationnement (2) est activé, en particulier en prise.

3. Dispositif selon la revendication 1 ou 2, **caractérisé en ce que,** dans l'état actif de l'actionneur (4), le frein de stationnement (2) est désactivé, en particulier dégagé.

4. Dispositif selon l'une quelconque des revendications précédentes, **caractérisé en ce que,** dans l'état actif de l'actionneur (4), la longueur effective de câble - comparée à lorsque l'actionneur (4) est passif - est prolongée.

5. Dispositif selon l'une quelconque des revendications précédentes, **caractérisé en ce que** l'actionneur (4) est conçu sous la forme d'une unité à piston-cylindre (4a) pouvant être actionnée par voie électromagnétique.

6. Dispositif selon la revendication 5, **caractérisé en ce que** l'unité à piston-cylindre (4a) présente un ressort de rappel (10) et une bobine (11).

7. Dispositif selon l'une quelconque des revendications précédentes, **caractérisé en ce que** l'actionneur (4) est formé comme une unité à piston-cylindre, dans lequel le piston peut être actionné par l'intermédiaire d'un moteur pas-à-pas, d'un dispositif d'entraînement à vis sans fin et roue dentée et/ou charnière ou par voie pneumatique ou hydraulique.

8. Dispositif selon l'une quelconque des revendications précédentes, **caractérisé en ce que** l'élément de liaison (5) est disposé directement dans la zone partielle (3a) du câble (3) ou y est intégré de manière efficace, dans lequel l'actionneur (4) est disposé solidaire du véhicule, mais est relié de manière fonctionnellement efficace à l'élément de liaison (5).

9. Dispositif selon l'une quelconque des revendications précédentes, **caractérisé en ce que** l'élément de liaison (5) présente une douille (15) comprenant une cavité (15a), un élément de piston (16) pouvant être guidé dans la cavité (15a).

10. Dispositif de la revendication 9, **caractérisé en ce que** l'élément de piston (16) peut être verrouillé ou déverrouillé par le biais de l'actionneur de levier (14) disposé mobile sur la douille (15), en particulier la douille (15), l'actionneur de levier (14) et une douille de guidage (19) sont conçus de sorte que, lorsqu'un levier de sélection de vitesses (6) relié au premier élément de câble (3b) se trouve dans une position en dehors de la position « P », l'actionneur de levier (14) se trouve dans la position verrouillée.

11. Dispositif selon l'une des revendications 9 ou 10, **caractérisé en ce qu'un** ressort de compression actif (17) est disposé entre l'élément de piston (16) et la douille (15).

12. Dispositif selon l'une quelconque des revendications 9 à 11, **caractérisé en ce que** l'actionneur actif (4) actionne, par l'intermédiaire d'un levier de commande (18), l'actionneur de levier (14) afin d'obtenir le déverrouillage de l'élément de piston (16), le levier de commande (18) pouvant être amené en contact avec la paroi terminale de la douille (15).

13. Dispositif selon l'une quelconque des revendications précédentes, **caractérisé en ce que** le premier élément de câble est relié fonctionnellement avec un levier de sélection de vitesses (6) de la transmission de véhicule automobile et le deuxième élément de câble (3c) est relié fonctionnellement avec le frein de stationnement (2) ou avec le mécanisme d'actionnement du frein de stationnement (2), en particulier, le frein de stationnement (2) ou son mécanisme d'actionnement étant chargé par ressort de manière correspondante dans la direction de son état activé.
